# EUROPEAN PATENT APPLICATION

(11) **EP 0 899 662 A1**
(43) Date of publication of application: **03.03.1999**
(21) Application number: 97306628.5
(22) Date of filing: 29.08.1997
(51) Int. Cl.: G06F 11/14

(54) **Backup and restore system for a computer network**

(71) Applicant: Hewlett-Packard Company, Palo Alto, California 94304 (US)
(72) Inventor: Gold, Stephen, Winterbourne Down, Bristol BS17 1DJ (GB); Bathie, Jon, Bristol BS6 5 AD (GB); King, Peter, Bristol BS12 2HD (GB); Crighton, Ian Peter, Shepton Mallet, Somerset BA4 5XX (GB)
(74) Representative: Lawman, Matthew John Mitchell

(57) **Abstract**

In a computer network environment (200), multiple clients (210) and multiple servers (230) are connected via a local area network (LAN) (220) to a backup file server (240). Each client (210) and each server is provided with backup agent software (215), which schedules backup operations on the basis of time since the last backup, the amount of information generated since the last backup, or the like. An agent (215) also sends a request to the backup server (240), prior to an actual backup, including information representative of the files that it intends to back up.

The backup server (240) is provided with a mechanism to receive backup requests from the client agents (215) and accept or reject backup requests on the basis of backup server loading, network loading, or the like. The backup server (240) is further provided with mechanisms to enact redundant file elimination (RFE), whereby the server indicates to the client agents, prior to files being backed up, that certain of the files to be backed up are already stored by the backup server. Thus, the clients do not need to send the redundant files to be backed up.

## Description

### Technical Field

The present invention relates to computer networks and in particular to systems and methods for backing up data in computer networks.

### Background Art

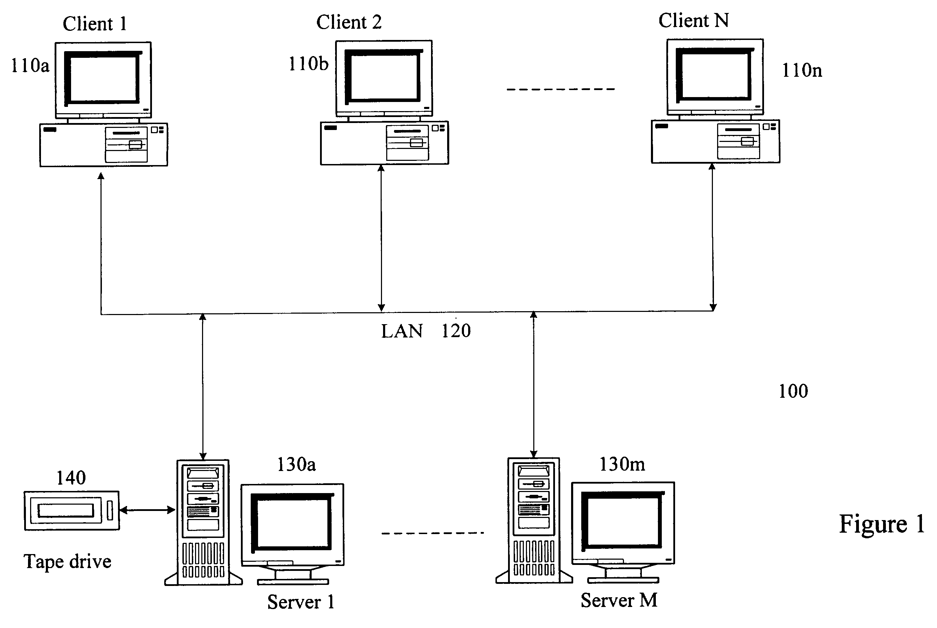

Typical computer networks in use today have the basic topology shown in the diagram in Figure 1. In Figure 1, several client workstations are connected via a network to several servers.

Customers perform work on the client workstations that can communicate via a network link with the servers. Clients typically store unique user data whereas servers typically provide a common central point for some function such as shared hard disk storage, software applications or printer control.

In general terms, servers can be thought of as more powerful clients, or clients with large amounts of disc storage. Thus, unless otherwise stated, the term "client" shall in the following description be used to mean both a server and a client in a network environment. Further, for ease of description only, the term 'client' shall also include any device or apparatus which stores data locally which can be backed up remotely.

There are a number of current schemes used for backing up data on the network. A first scheme is for each client and server to individually store data to a device such as a tape drive. Tape storage has become the preferred method of backing up information on computers due to its high capacity, durability, and portability. This method requires each person responsible for a system to be responsible for backing up the data. Also, each system requires its own backup device. A second scheme is for each client to store important data on a file server, where the server data is backed up at regular intervals, for example on a daily basis. Thus, if a client fails, potentially only less important information is lost. A third scheme, which is available, for example, to systems which operate under Windows NT4 and are part of an NT Domain, is that all information on a client is backed up, typically overnight, to a tape drive on an NT server, which will also back up its own data to the tape drive.

Known backup systems offer relatively good protection for network data, but with a very high administration overhead. In particular, the schemes where client data is stored or backed up to a server, and the server data is backed up to tape, tend to offer the most convenient strategies for administrators since users do not need to perform their own individual backups. However, the administrators still have the problem of backups not being run, or failing due to lack of training or knowledge. This is especially true of backup scheduling, media handling and maintenance schemes, such as tape rotation or drive cleaning. Failed backups can result in data loss, which, at best, causes time to be lost in recreating the data.

Also, as the amount of networked data increases, backup capacity and network bandwidth become significant limiting factors (takes longer to backup and thus increases network down time during backup), as does the increasing amount of backup administration overhead.

Consider a 10 - client and 2 - server network where each client has 2 Gbytes of disk storage and each server has 20 Gbytes of disk space. A tape storage device would potentially need to have a capacity of 60 Gbytes to guarantee to completely back up the network.

Further, a typical 10-Base-T network can transfer at most 1 Mbyte of data per second. A full backup of the above network would take 60,000 seconds or 17 hours. During this time, the network would be unavailable for use for any other means. This would be unacceptable to most customers.

### Disclosure of the Invention

In accordance with one aspect, the present invention provides a network client comprising network interface means, storage means for storing client data and means to schedule a backup operation for some or all of the stored data to be sent to backup apparatus attached to the network.

An advantage of the invention is that the scheduling means can dynamically determine when the client needs to back up selected data, rather than running at fixed times and dates which have to be configured by a network administrator, or after each data write.

In preferred embodiments, the client further comprises means to generate a request to initiate a backup operation, means to transmit the request to the backup apparatus and means, in response to a positive reply from the backup apparatus, to initiate a backup operation. The client thus schedules a backup operation and initially requests a backup 'slot', which is allocated or denied by the backup apparatus.

Preferably, the client further comprises means to select data stored by the client to be backed up. For example, the client may only select data to be backup up that has not been backed up before. Alternatively, or additionally, the client may select data which has been amended since it was last backed up.

The client preferably further comprises means to transmit to the backup apparatus a request including an indication of the identity of the data selected to be backed up. Thus, the backup apparatus is given the opportunity to compare the items of data in the request with data that it already has stored. Where some of the items of data in the request are already stored, for example if another client had backed up the same data, then the backup apparatus indicates to the client that the particular selected items are redundant as far as requiring another backup is concerned.

An advantage of the request is that the backup apparatus can indicate when data for which a backup is requested already exists on the backup storage means. Preferably data can be single items, for example files, or portions of items. Thus, if a version of a file has already been backed up, only the new bits of the file need to be backed up. This saves network bandwidth.

The means to schedule a backup operation may schedule on the basis of the time elapsed since a previous back up operation being greater than a pre-determined threshold time. Additionally, or alternatively, the means to schedule a backup operation may schedule on the basis of the amount of new data generated since a previous backup operation being greater than a pre-determined threshold amount of data.

In preferred embodiments, the client further comprises means to confirm that any one or more of the following parameters is within a respective pre-determined threshold: client loading; backup apparatus loading; and network loading.

If, for some reason, a backup operation is not possible, for example system or network loading exceeds a pre-determined threshold, the scheduling means may comprise means to re-schedule a backup operation in the event that an attempt to schedule a backup operation fails or is refused.

Other aspects and embodiments of the invention will become apparent from the following description and claims.

An embodiment of the present invention will now be described in more detail, by way of example only, with reference to the following drawings, of which:

### Brief Description of the Drawings

Figure 1 is a diagram of a conventional computer network;
Figure 2 is a diagram of a computer network modified to operate in accordance with the present exemplary embodiment;
Figure 3 is a diagram illustrating the main functional features of a client according to the present exemplary embodiment;
Figure 4 is a diagram which illustrates the main file structures on the backup server to facilitate a backup operation according to the present exemplary embodiment;
Figure 5 is a diagram illustrating the main functional features of a backup apparatus according to the present exemplary embodiment;
Figure 6 is a flow diagram representing a backup operation according to the present exemplary embodiment;
Figure 7 is a diagram which illustrates file information gathered during the procedure described in relation to Figure 6; and
Figure 8 is a diagram which represents a redundant file elimination index.

### Best Mode For Carrying Out the Invention, & Industrial Applicability

Figure 1 is a diagram, which illustrates a general prior art networked computer environment 100. As shown, a plurality of computer systems, or clients, (designated 110a, 110b, etc) are connected to a computer network 120. In this example, the network is a LAN (local area network), such as an Ethernet, which supports the TCP/IP data communications protocol. Also connected to the LAN are a number of servers (designated 130a, 130b, etc). The servers may be, for example, file servers, print servers, email servers, or any combination thereof. In the diagram, a tape drive 140 is illustrated connected to a server 130a, where the server 130a is a file server. The data stored on the file server 130a, in on-line storage such as a hard disk drive, is backed up to the tape drive 140 on a daily basis. A backup operation is scheduled and controlled by backup software, which runs as a background process on the file server 130a. The backup software schedules the backup to happen at, for example, 11:00pm each night, and controls the transfer of data from the file server 130a to the tape drive 140.

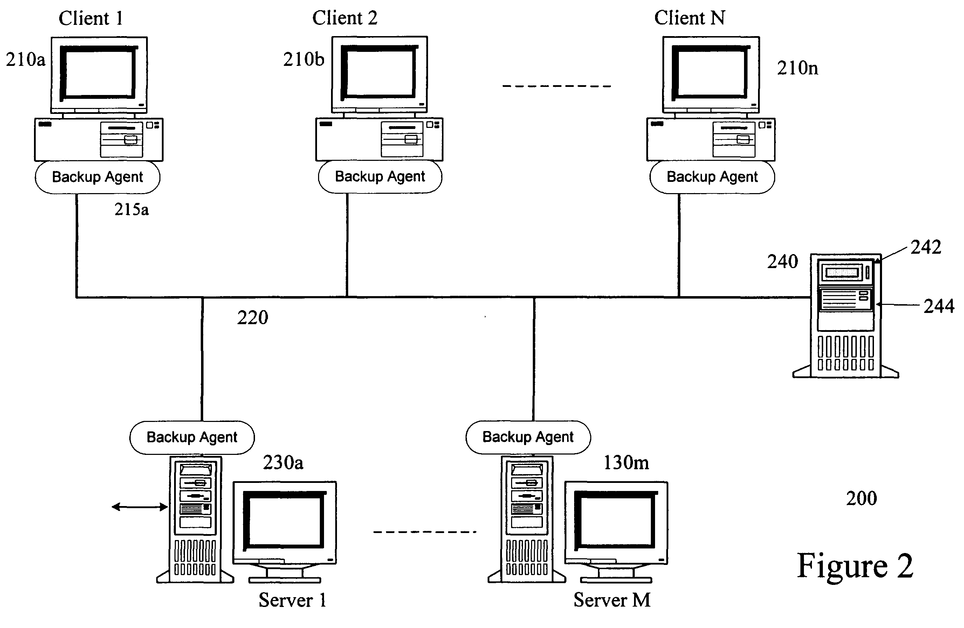

Figure 2 is a diagram, which illustrates a networked computer environment 200 according to the present embodiment. As shown, a plurality of clients (designated 210a, 210b, etc) are connected to a computer network 220. In this case also, the network is a LAN (local area network), such as an Ethernet, which supports the TCP/IP data communications protocol. A number of servers (designated 230a, 230b, etc) are connected to the LAN 220. The servers, as above, may be file servers, print servers, email servers, or any combination thereof. Also connected to the LAN 220 is a backup server 240. The backup server 240 is shown to include a hard disk drive 242 and a tape drive 244. The operation of the backup server 240 will be described in more detail below.

For ease of description only, in the remainder of this description, no distinction is drawn between clients and servers, and both will be referred to as clients. Further, unless otherwise indicated, only one client system 210a will be considered, although it will be understood that the other clients operate in the same manner.

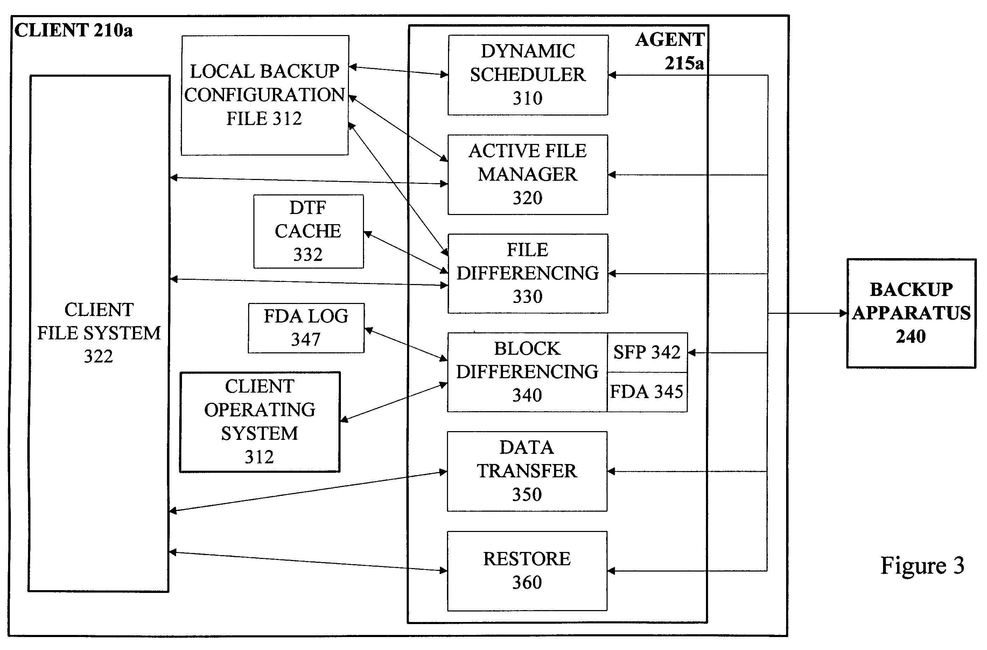

The client 210a includes a backup agent 215a, which comprises one or more software routines. The main functional modules of the backup agent 215a are illustrated in the diagram in Figure 3. Each module comprises one or more software routines, written for example in the C++ programming language, which control the client workstation 210a to process data and communicate with the backup server 240 as described in detail below. The software routines are stored on a hard disk (not shown) in the client and are loaded into main memory (RAM) when they are required to operate, and a central processor in the client processes the instructions to control the client to report in accordance with the present embodiment. The lines illustrated interconnecting the various modules and diagram blocks represent communications channels which are open some or all of the time, depending on requirement.

### DYNAMIC SCHEDULER MODULE

In Figure 3, the dynamic scheduler 310 is a module responsible for dynamically initiating a backup cycle from the client 210a, based on time since the last backup and the local system resources. A local backup configuration file 312 contains details on a general network-wide policy set by the backup server 240 and a local user-defined policy, in terms of a target time delay before data is protected. For example, one default policy would be to attempt a backup once an hour. The dynamic scheduler 310 is a background process which runs permanently on the client 210a.

After the target time delay (e.g. 1-hour) has passed, the scheduler 310 assesses the local client system 210a resources to ensure that the backup can run without seriously impacting the system performance. If the local client system 210a is heavily loaded, the scheduler 310 will retry a short period later (e.g. after 5 minutes) and continue retrying until the system has enough free resources to run the backup. There is an upper time limit to the retry, for example 30 - minutes, after which time a backup is forced irrespective of system loading. The upper time limit for retrying is another general policy variable stored locally in the backup configuration file 312.

Once the local client system resources allow, the scheduler 310 communicates with the backup server 240 to request a backup slot. The backup server 240 will allow the backup job to start if the network bandwidth can support it. If there are already other backups running from other clients, which are using up all of the network bandwidth allocated to backups, the backup server communicates with the client to refuse the request. As a result, the scheduler 310 returns to the retry cycle and waits until the backup server 240 gives permission to progress.

Because the backup agent 215a dynamically initiates the backup jobs, the overall network backup scheme is configuration independent. Thus, a client workstation can power-save, or a mobile client workstation can be detached from the network, and on return the backups can continue seamlessly. Thus, there is no requirement for the backup server 240 to have any 'knowledge' of which clients are connected, or are not connected, to the network at any time.

The dynamic scheduler 310 also has responsibility for initiating the operation of the other modules when required.

### ACTIVE FILE MANAGER MODULE

The active file manager module (AFM) 320 monitors which files are to be opened by the backup agent 215a, for the purpose of backing up. Before a file is opened therefor, the AFM 320 checks the client's file system 322 to see if the file is already in use by another program running on the client 210a. If the file is already in use, the AFM 320 waits until the file is in a "safe" state for the backup agent 215a to back it up. Only when the file is "safe" does the AFM 320 allow the backup agent 215a to open the file. A file can be "safe" even if the file is locked and in use. If the file is written to during the backup operation, the AFM 320 automatically preserves the data to be backed up by sending the respective blocks directly to the backup server over the network. The backup server can then manage or re-order these out of order backup blocks, thus preserving the original state of the file from when the backup started.

For example, consider a database of customer addresses (not shown), which is being backup up. During the backup, a user changes one of the entries in a part of the database that has not yet been backed up. The AFM 320 immediately sends the old address to the backup server, and when the backup reaches this point it skips the updated address in the database. This method means that when a database application thinks it has written data to disk, it has indeed been written to disk, and not cached somewhere else. Thus, there is no possibility of data loss or corruption if the server 240 were to crash during the backup.

The AFM 320 can be user-configured to determine when a file is "safe" to backup. For example, the AFM 320 can use a write inactivity period to decide this, which would be one of the general policy values stored in the backup configuration file 312. In order to ensure that a backup copy of a file does not contain a partial transaction, the AFM 320 monitors the period of time that passes without a write taking place. For example, if the time is set to 5 seconds, the file is not "safe" until there is a 5 second period when there are no writes active, and at this point the file can be backed up. There is also a value for the period of time after which the AFM 320 gives up trying to find a safe state. For example, if this time is set to 60 seconds, then the AFM 320 will try for one minute to find a 5 second period with no writes.

Some applications, notably databases, operate a number of files simultaneously (e.g. data files and index files) and to assure the overall integrity of such files they must be configured as a "group". A group defines a number of files that must be backed up from a collective "safe" state, and only when every file in the group is simultaneously in a "safe" state can each file be backed up. This grouping is performed automatically by the AFM 320 when it detects one of the major database types (e.g. Exchange, Notes, SQL Server, and Oracle). Further, the AFM 320 may be configured to treat user-defined list of files as groups, with the group definitions being stored in the backup configuration file 312.

### FILE DIFFERENCING MODULE

The file differencing module (FDM) 330 is the module in the backup agent 215a selects the files to be backed up by determining which files have changed or been added since the last backup. This is achieved by reading the current directory tree of the local file system 322 and checking each file's modified time/date against the entries in a cached Directory Tree File 332 generated from the last backup. Modified files will have different times and dates, and new files will have no corresponding entry. Modified files are marked as "Modified" and new files are marked as "New". Note that for the first backup after installation all files will be new files.

Before the list of modified or new files is further processed, the list is filtered for excluded files (such as temporary files, Internet cache files, swap files, etc). The policy for excluding files is held in the local backup configuration file 312, and is generated from a general network policy set from the backup server 240 and also from a user-defined set of excluded files or directories.

The next stage is to determine which of the new files are already held on the backup server 240, and are thus redundant. For example, if there has already been a backup of a Windows95 workstation, then subsequent backups will determine that the Windows95 operating system files are redundant. The client agent 215a first sends the list of the selected new files to the backup server 240. The list contains for each file a 32-bit CRC code (calculated for the respective name, date/time stamp and file size information). The backup server 240 returns a list of the files that match its existing backup file contents, and for each file it also returns a signature (in this case a 64-bit CRC checksum calculated over the actual file data) and an indication of the location of the file on the backup server. For each of the potentially redundant files in the list, the backup agent 215a generates a respective signature value and compares it with the value for the file stored in the backup server 240. Where the signatures match, the file marking is changed from "New" to "Redundant". Thus, the output of the FDM 330 is a list of all files which are new or modified since the last backup, marked as:
- "Redundant",: copy already held on backup server;
- "New",: new file, thus no need for block differencing; or
- "Modified",: use block differencing to determine which blocks changed.

As well as files, the FDM 330 identifies any modifications to the system information used to rebuild the system in disaster recovery. This covers areas such as NetWare NDS partitions, disc partition information, file system types and details (e.g. compressed), bootstrap partitions (e.g. MBR, NetWare DOS partition).

### BLOCK DIFFERENCING

A block-differencing module (BDM) 340 determines which blocks in each file have changed since the last backup. The process of identifying the changed portions (deltas) of files is performed by two basic processes. The first process is a sliding fingerprint (SFP) process 342. In general, a fingerprinting process is a probabilistic algorithm, where the probability of a failure is made far less than the probability of an undetected failure of the underlying storage and communication media (for further, detailed information on fingerprinting, the reader is referred to the book by Richard Karp and Michael Rabin, "Efficient randomised pattern matching algorithms", Harvard University Centre for Research in Computing Technology, TR-31-81, Dec 1981). The second process involves active detection of writes to regions of files; this technique requires a process called a file delta accelerator (FDA) process 345. The FDA process 345 is a background process which operates all the time to monitor the client's operating system 312 write calls and maintain a log 347 of which logical regions of which files have been modified.

The FDA process 345 is more efficient for files that are updated in place (e.g. databases), while the SFP process 342 is far more efficient for document files that are entirely (or largely) rewritten with each update - although, only a small portion of the file may have been modified. As will be described, the present embodiment makes use of a combination of an SFP process 342 and a FDA process 345. As each modified file is opened for backup, the FDA process log 347 is checked to see how much of the file has been modified. If more than a threshold percentage, for example 5-10 percent, has been modified, and if the absolute size of the changes is smaller than a given size (e.g. 2 MB), then the SFP process 342 is selected as the appropriate process to use. Otherwise, the FDA-detected regions are used. Note that if the local client 210a crashes without a 'clean' FDA shutdown, all FDA log 347 information is totally invalidated, so the backup client 215a must temporarily revert to the SFP process (or a conventional incremental backup) when the next backup is performed.

The SFP process 342 divides an updated file into equal-sized "chunks", the size of which varies depending on the file size. Each chunk has a 12-byte fingerprint calculated for it, and the fingerprints are sent with the backup data for the file to be stored by the backup server 240. When a file is to be checked with the SFP process 342, the backup agent 215a communicates with the backup server 240 to download the fingerprint set for the file in question. It is also possible to locally cache fingerprint sets for files that are frequently accessed. The SFP process 342 then calculates the fingerprint function for the updated version of the file, starting from the first byte and using a chunk size the same size as for the last backup of the file. Then the SFP process 342 compares the resulting new first fingerprint with the previous fingerprint set to a find a match. If there is a match, then the chunk starting at that byte is already present on the backup server 240, and thus need not be backed up. If there is no match, then the fingerprint function calculation is repeated but starting at the next (second) byte, and so on.

For all files that are "Modified", the block differencing process is performed as described above, producing a stream of modified chunks (plus new fingerprints) for each file. For "New" files there is no need for block differencing, so the entire file is broken up into chunks (the initial chunk size depends on the file size) with a new fingerprint being calculated for each chunk. All these file chunks (plus new fingerprints) are sent to a data transfer module 350, described below in more detail, to be compressed and sent to the backup server 240.

### DATA TRANSFER MODULE

The data transfer module (DTM) 350 performs the actual transfer of the backup data from the backup agent 210a to the backup server 240. As chunks of backup data (plus fingerprints) are received from the BDM 340, they are compressed and added to a backup stream of data for transfer to the backup server 240. There is a delay between the transfer of each chunk due to the times taken to obtain the chunk and compress it, and the need to limit the client backup transfer data rate. This method breaks the backup stream into small discrete pieces, thus making it network bandwidth friendly. The selected data transfer rate and delay is determined by the backup server 240, as will be described.

All the differences in all the changed files since the last backup are stored in backup directory files (BDFs). BDFs also contain a fingerprint for each respective file chunk, and RFE index information (date/time stamps, signatures, etc) for each changed file.

All backup data is indexed so that it can be reconstructed from the various BDFs on the backup server 240. Pointers to areas of the various BDFs are used for reconstruction purposes, and these pointers are held in a directory tree file (DTF) that indexes all the files on the backup server 240.

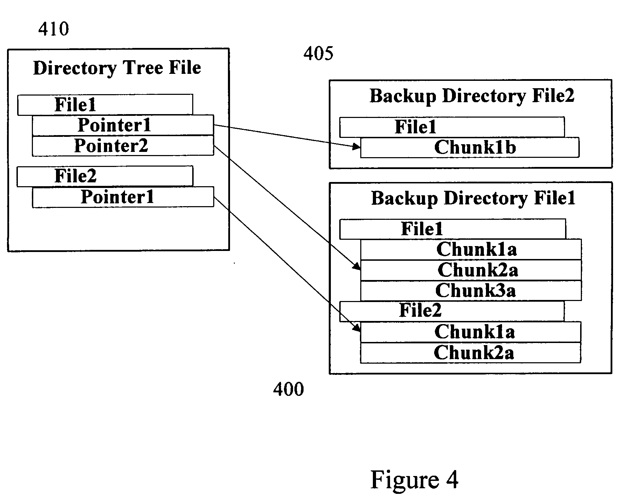

An exemplary DTF and associated BDFs, BDF1 and BDF2, are illustrated in Figure 4. For example, with reference to Figure 4, consider the scenario in which a file, File1, was originally backed up in BDF1 400, and then the first chunk, Chunk1a, was modified and was stored in BDF2 405, as Chunk1b. Then, the entry in the DTF 410 has a pointer, Pointer1, to BDF2 for the first chunk, Chunk1b, and also a pointer, Pointer2, to BDF1 for the unchanged chunks, Chunk2a and Chunk3a, of the file. Thus, for a restore operation of File 1, File 1 comprises Chunk 1b (in BDF2) and all chunks from Chunk 2a (in BDF1).

For "Redundant" files, the entry in the DTF 410 is a copy of the pointer(s) to the already existing copy of that file on the backup server 240.

Every time a backup is performed, a new DTF is generated. The new DTF is sent to the backup server 240 and also cached to the local client system. Since only a small number of files will typically have changed since the last backup, the new DTF can use pointers to the previous DTF for those parts of the directory that are unchanged.

### RESTORE MODULE

The restore module 350, performs restore operations using the DTFs to generate a directory tree of all files that can be restored. The backup agent 215a can either use the local cached copies of the DTFs (for recent views) or download other ones from the backup server 240 (for older views). If the restore was being performed from a mounted tape (e.g. a historical archive) in the backup server 240, then there would be a complete second set of DTFs to provide an alternate historical restore view. Any restore from tape would be much slower.

Since the DTF generated for every delta backup is a (virtual) complete list of all files, the user can change the restore view to an earlier backup and restore an older copy of a file. By default, the initial restore tree is from the latest backup.

When a user selects to restore a specific file from a specific backup, the DTFs are used to identify which portions of which BDF contain the file data. This data is then copied from the backup server 240 to the backup agent 215a, decompressed, and written to the specified location in the client storage.

A directory tree of all files which can be restored is generated and viewed in a graphical user interface, for example an extension to the Windows Explorer program available on Microsoft Windows 95 and Windows NT4. This provides a familiar and easy to use environment for users to restore their backup data.

The above restore process covers restoration from the local client 210a. However, this does not apply to server data, particularly for NetWare, which does not have a graphical console. In this case, the server data restore tree would need to be available through a remote workstation console (not shown). There are two methods by which this could be done:
* if a user logs in as a backup administrator in the Backup server administration interface, then display ALL server volumes for restore; or
* alternatively, use the configured server drive mappings to indicate which server volumes to display in the restore directory tree. File security information stored in the BDFs is used to filter the restore tree based on the user security used for each server drive mapping.

### BACKUP SERVER

According to the present embodiment, the backup server 240 comprises a set of modules each consisting of one or more software routines, written for example in the C++ programming language. The backup server 240 runs on a dedicated networked computing platform, for example an Intel Pentium based workstation operating under Windows NT4, and accepts communications from all allowed client backup agents 215 (set up during installation).

The backup server 240 comprises two-levels of data storage for backup data. The first level of data storage is on-line storage, in the form of a hard disk drive 244, from which any client can restore any 'lost' files or its whole file system. Hitherto, backup systems known to the present inventors rely on tape backup as the first, and typically only, level of backup. The second level of storage comprises off-site tapes, which are removed from the tape drive in the backup server by the backup server administrator. The data on the tape can be accessed by a client once it has been re-loaded into the tape drive 242, since the tape drive can be 'mounted' as a volume of the file system of the backup server 240. Of course, data recovery from tape will always take longer than data recovery from on-line storage.

The backup server according to the present invention provides extremely convenient access by a client to recover one or more lost files, which have been backed up, without the need to find an archived tape. Typically, tape-based backup systems use a different tape for each day of the week, and thus require use of a particular tape for the day on which the data was last backed up to restore any data which has been lost. This means that tape-based backup systems must regularly (eg once a week) repeat a full backup of all data (including unchanged file that have already been backed up) to prevent needing an unmanageable number of tapes to restore a file or system. The present backup server maintains in on-line storage 244 a permanent backup copy of every backed up client file, and any or all files can be restored at any time by a client-initiated process. This also means that there is no longer any need to repeat a backup of unchanged files - only the changes are ever sent after the first backup.

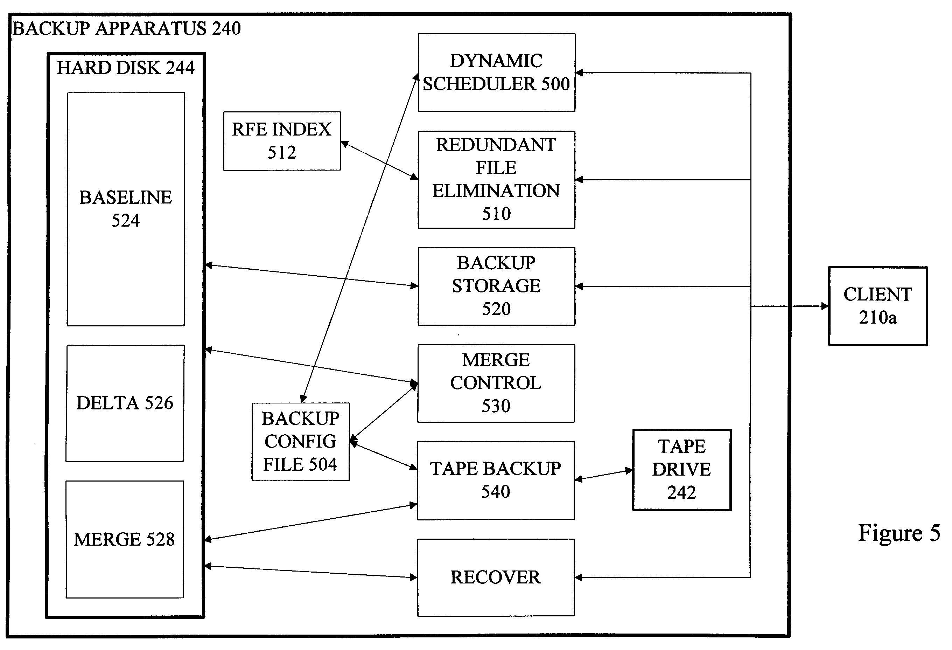

The major functional modules in the backup server 240 will now be described in association with the functional block diagram in Figure 5.

### BACKUP DYNAMIC SCHEDULER

The dynamic scheduler 500, or server scheduler, for the backup server 240, works in conjunction with the dynamic scheduler 310 in the client backup agent 215a. The role of the backup scheduler 500 is to control the flow of backup jobs in order to control the network bandwidth used by the backup data traffic.

The server scheduler will vary the active jobs so that the amount of backup traffic over the network is throttled, and is kept within a defined minimum bandwidth such as 5%. Thus the backup traffic will be guaranteed never to use more than 5% of the network bandwidth. If there are too many backup jobs or too much changed data then the time to complete the backup jobs will extend. Thus the backup server scheduling of the backup jobs may mean that data cannot always be protected within the target period (eg 1 hour). The parameters and their respective thresholds, which are used to determine whether a backup operation can be allowed, are stored in a backup configuration file 504. There are two basic methods that can be used to throttle the backup traffic:
1. Each backup agent transfers the backup data at a specified controlled rate (eg 50KB/sec) by adding artificial delays between small backup data blocks. For example, a single client sending 16K blocks with 200ms delays between blocks uses 5% of available network bandwidth for a 10 Mbit ethernet.
2. Each backup agent bursts the backup data when they are active, aiming to complete the backup in a short time. However, the size of the backup data blocks needs to be limited (eg to 16K) so that the backup does not use all available network bandwidth. A single client streaming 16K blocks uses approximately 25% of the available network bandwidth, and two streaming clients use 45% etc. The throttling will then sequence the jobs, so that only a small number (eg 2) are actively simultaneously, and add large delays between jobs so that the overall average bandwidth used is 5%.

The server scheduler 500 also includes a prioritisation scheme based on the time jobs have been waiting to start, the estimated amount of data sent in each job, and the available network bandwidth. The prioritisation scheme variables are stored in a prioritisation file 502 on the backup server 500. For example, if a backup request from a backup agent is refused due to insufficient network bandwidth, the time of the first refusal is logged, and subsequent requests are compared with other outstanding requests against the length of time since the first refusal. The job that has been waiting the longest will be started first. An adaptive algorithm in the server scheduler 500 that 'learns' the average job size from the system, by averaging over all jobs received in a fixed time period of, for example, one week, can determine the estimated size of the jobs.

The server scheduler 500 also adapts to the network conditions so that if the network has much more than 5% available bandwidth, then the server scheduler will sequence backup jobs to use more network bandwidth (e.g. 10%) during this slack period.

The backup server administrator may configure the server scheduler 500 to give priority to the backup jobs at the expense of the network bandwidth, in which case the job sequencing priorities are assigned based on the time since the last backup rather than network bandwidth.

### REDUNDANT FILE ELIMINATION MODULE

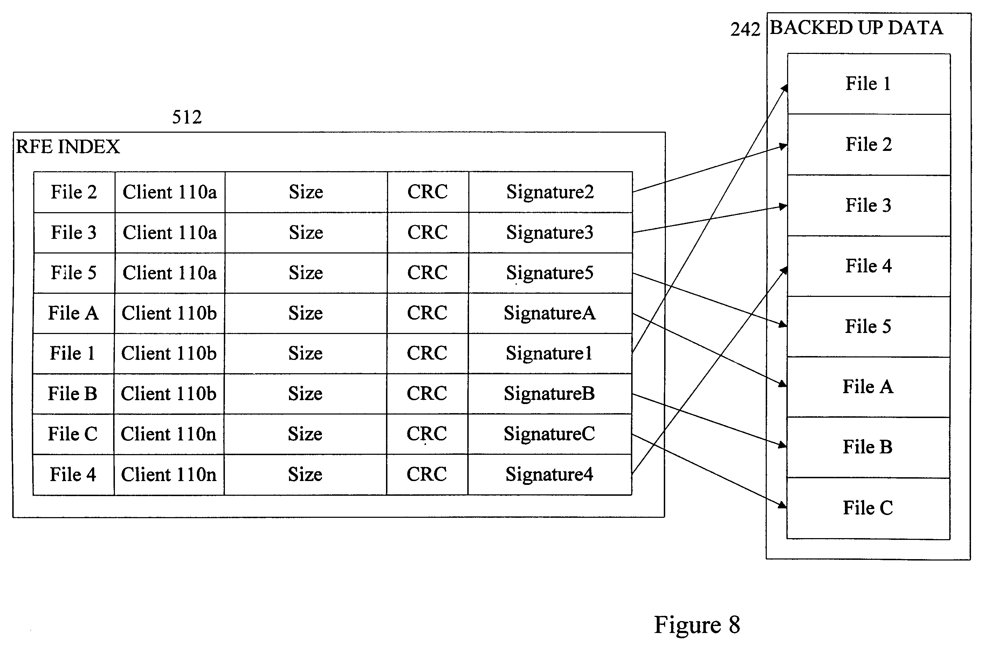

The redundant file elimination (RFE) module 510 maintains an index, the RFE index 512, in the backup server 240. The RFE index 512 is a database held in memory of all the files held in the backup storage. The index is accessed by the backup agent 215a to check for redundant files (i.e. files that have already been backed up by another client system and therefore do not need to be backed up again by the local client 215a). The RFE index 512 holds a file record for each file stored. Each file record, as shown in Figure 8, only takes approximately 28 bytes (4 bytes of file ID, 4 bytes of client ID, 8 bytes of file size, 4 bytes of CRC (calculated over the name/size/modified date and time stamp), 8 bytes of file signature), so that even with millions of files to store the backup server memory requirements are not excessive. Figure 8 will be described in more detail below.

The backup agent 215a sends to the backup server 240 a list identifying new files to be backed up. The list only contains the four bytes of CRC for each file, where the CRC contains sufficient information to allow file comparison and identification. Using the CRC information, each file in the list is compared with entries in the RFE index 512 for a match. If any matches are found, the backup server 240 returns a list of these files, plus their signatures and locations, as already mentioned above. The backup agent 215a compares the returned signatures with signatures generated for its local files to determine if the files are exactly the same.

### BACKUP STORAGE MODULE

Each backup agent 215 sends its backup data and the most recent DFT to the backup server 240 for storage by the backup storage module (BSM) 520. The backup data comprises the stream of file data to be backup up. The backup storage module 520 stores the files as on-line media such as one or more hard disk drives 244. The on-line media 244 is divided into logical areas, including:
* Full area 524 (which holds the baseline full backup and the respective fingerprint data)
* Delta area 526 (which holds changes since the baseline full backup and respective fingerprint data)
* Merge area 528 (which is the workspace used during merge of changes into new baseline full backups)

The hard disk 244 also includes a work area (not shown) which is used to hold working files such as the prioritisation file 502 and the backup configuration file 504. The baseline full backups in the full area 524 consist of a single backup data file and directory tree file for each client 215, and these are used as a baseline for the delta backup data. For example, if a delta is the first block of a file, then to restore this file the first block is obtained from the delta backup and the rest is obtained from the baseline full backup. The full backups are initialised when the first backup is performed on the client system. However, if the initial full backups were then left untouched, over time there would be an unmanageably large number of delta backups (which would impact storage space and restore time). Thus, there must be a regular update of the baseline full backups by merging the delta data into a new baseline full backup, as will be described below.

The delta area 526 contains the delta backups from each client. Delta backups also each comprise a backup data file and a directory tree file. Note that the directory tree files are themselves deltas on the baseline full backup directory tree file.

The merge area 528 is used for merge operations. At regular intervals, for example every month, there is a space-saving operation to merge the oldest delta backups for each client into a new baseline full backup. Also, there are regular space-saving operations to merge the hourly delta backups for a 24-hour period into a single delta backup, as described below.

### MERGE CONTROL MODULE

The merge control module MCM 530 is responsible for merging multiple delta backups together with either the baseline full backup or with other delta backups. The purpose of this is to reduce the amount of on-line capacity used by deltas, while maintaining a reasonable history of changes so that the user can restore files from up to at least a week ago. Without this merge function, there would be at least 10 deltas for each day (hourly backups).

The MCM 530 can be configured by the server administrator with merge criteria to suit the network environment. The criteria are stored in the backup configuration file 504. For example, keeping hourly backups would not be productive beyond one day. Therefore, one possible default criterion is to merge the last 24 hours' deltas into one daily delta, for example at 11:59pm each day. Another possible scenario is for the MCM 530 to reduce the number of daily deltas, at the end of four weeks, by merging the oldest two weeks of deltas into a new baseline full backup. In this example, whenever the user requests a restore view, they have the capability to view hourly history for the current day and at least two weeks of daily history.

If the backup storage delta area 526 reaches a pre-determined threshold, for example 95% capacity, the MCM 530 overrides the merge criteria and performs an immediate merge of the older deltas into the baseline full backup.

Another function of the MCM 530 is to delete files from the baseline full backup when they have been deleted from a respective client system and are older than a predefined, user-configurable period such as one month. The MCM 530 regularly (e.g. weekly) compares the directory tree files of the baseline full backup with the directory tree files of the delta backups. Since directory tree files contain a 'snap-shot' of all files present in the file system at the time, deleted files will be present in the full backup but not in any of the delta backups. After identifying any deleted files, if these files are older than a predefined period (e.g. one-month) then they are removed from the baseline full backup. In this way, the storage requirements of the baseline full backup are not dramatically increased by old deleted data. It is still possible to keep copies of old data in archives by using offsite tapes generated by a tape backup module.

A further feature of the MCM 530 is to detect when multiple pointers, from different clients, point to a single baseline file entry. In this case, a standard merge operation cannot occur, to merge a delta for one client with the baseline entry, otherwise the entry would be wrong for the other client(s). The means to overcome this, applied by the MCM, is not to merge the baseline entry with any deltas, unless all the deltas are the same. One alternative would be to carry out the merge for one client but modify the deltas for the other client. Another alternative would be create a new baseline entry for the other client(s) and then merge the delta with the baseline entry for the first-mentioned client.

### TAPE BACKUP MODULE

As already described, initially all the backup data is sent from the backup agents 215 to on-line storage (hard disc) 244 on the backup server 240, and is available for immediate restore from that media. However, this does not provide a complete backup solution, as the backup data is still susceptible to a disaster since it may still be on the same site as the original data. Therefore, in accordance with the present embodiment, a regular copy of the backup server data is made to removable storage (such as tape), so that it can be taken offsite.

A tape backup module (TBM) 540 provides this capability. The TBM 540 copies the backup server's, on-line data on the hard disk 242 to tape media in a tape drive 244 at a customer-scheduled time and day/date. The TBM 540 copies a mirror image of the blocks of data on the hard disk 244 to tape. Such block-level copying allows large blocks of data to be read directly from the disc, rather than reading each file one at a time through the file system. This improves the data rate from disc to tape and thus ensures that the tape drive 244 is kept constantly supplied (streaming) with data.

The tape backup operation necessarily runs while the backup server is still actively able to accept and manage backup data from the clients. For this reason, the TBM 540 incorporates active file manager technology, which is described above, to prevent backup corruption.

The backup administrator can schedule the generation of an offsite backup tape by specifying the day/date and the time of day they want the tape. This configuration information is stored in a backup configuration file 504. In other words, the administrator can configure the TBM 540 to produce a complete tape copy of all backup data at a convenient time, for example, to take the tape with them when they leave work at 5.30pm each weekday. The TBM 540 calculates the start time of a tape backup based on the administrator's completion time, the amount of data held on the backup server, and the speed of the tape drive.

The default offsite tape backup schedule is every weekday at 5.30pm. If a tape is loaded in the drive at the start time of the backup, it will automatically be overwritten with a new full backup. At the end of the backup, the tape is automatically ejected from the tape drive so that it is clearly finished and ready to be taken away by the administrator.

Since deleted files more than one month old will be removed from the baseline full backup, the offsite tapes can be used as archive storage for such files. By saving an offsite tape at regular intervals (for example at the end of each week) the user can archive the backup data in case any old deleted files are ever required in the future. Also, there may be legal requirements to keep backup data for a period of years. There should be a configuration option to enforce this retention of offsite media for archive purposes, so that the regular tape backup will not automatically overwrite archived tapes.

Since the tape backup media may be used as archives, there must be a facility for the backup agent 215a to access an archive tape for restoring files. The way this is done is to mount the backup server image on the tape 242 as a read-only disc volume, and thus provide access to the archived directory tree files and backup data files on the tape. To speed up the generation of the restore tree, the tape copies of the directory tree files can be copied onto the backup server hard disc. After the archive tape is successfully mounted for restore access, the restore tree views in Windows Explorer provides an archive restore tree, as described above.

### DISASTER RECOVERY MODULE

When a client system 210a completely fails, the backup server 240 can be used to restore the complete data environment onto a new replacement or repaired system. All of the files are held on the on-line storage 244 of the backup server 240. A disaster recovery module (DRM) 550 recovers requested files from the baseline full backup for the client and any deltas. The new system must have the appropriate operating system installed, and then install the backup agent to communicate with the backup server 240. The restore module 350 of a client is initiated by an administrator to communicate with the DRM 550 and copy back all of the data from the last backup (in effect a reverse RFE).

The DTFs on the backup server 240 are used to determine the state of the system to be recovered. There are also options to select an older system state to restore for the disaster recovery by using previous delta versions of the directory tree files, which would be used if the latest state of the system were corrupted.

Due to the fact that large quantities of the data need to be transferred over the network to recover a complete system, there is also an option to schedule the disaster recovery operation. Since the recovery is performed from the on-line storage 244 in the backup server 240, there is no user intervention required and the recovery can proceed unattended at any time.

### BACKUP OPERATION

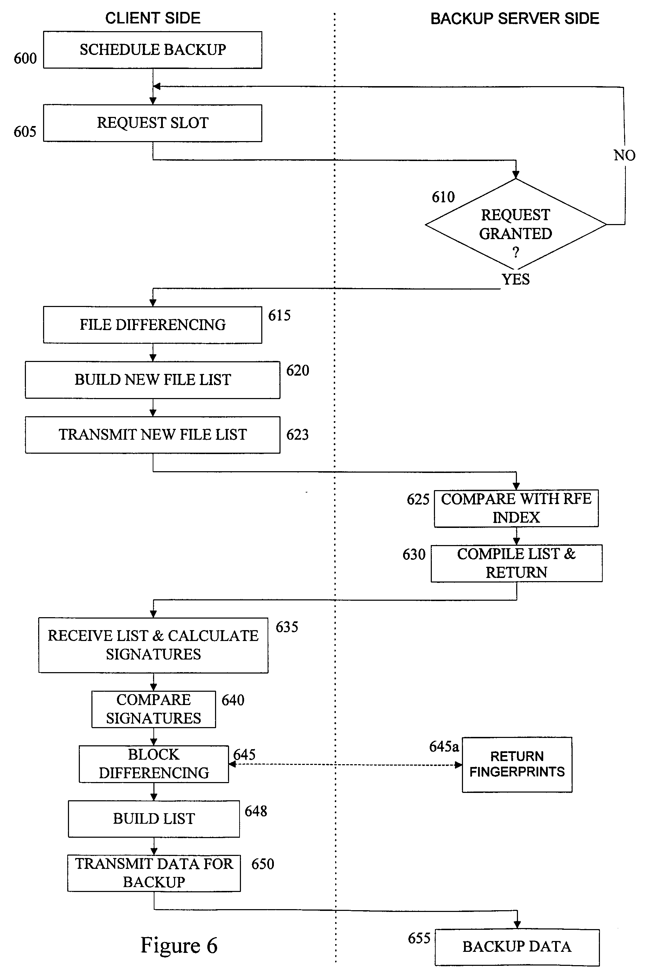

A basic backup operation from the client 210a to the backup server 240 will now be described with reference to the flow diagram in Figure 6, which splits client side and backup server side operations.

For the backup agent 215a, the dynamic scheduler 310 schedules a backup operation, in step 600, on the basis of the time lapsed since the last backup and/or the amount of new data, client loading, and/or network loading. When the criteria for the backup operation are met, the dynamic scheduler 310 issues a request, in step 605, to the backup server 240 for a backup slot. The backup server 240 receives the request, and the backup scheduler 500 checks the backup server loading and network loading, in step 610, and accepts or rejects the request. If rejected, the dynamic scheduler 310 makes further requests until a request is accepted.

Once a request is accepted by the backup server 240, in step 615 the FDM 330 compiles from all the files stored on the client 210a a first list of files that have been amended or added since the client was last backed up.

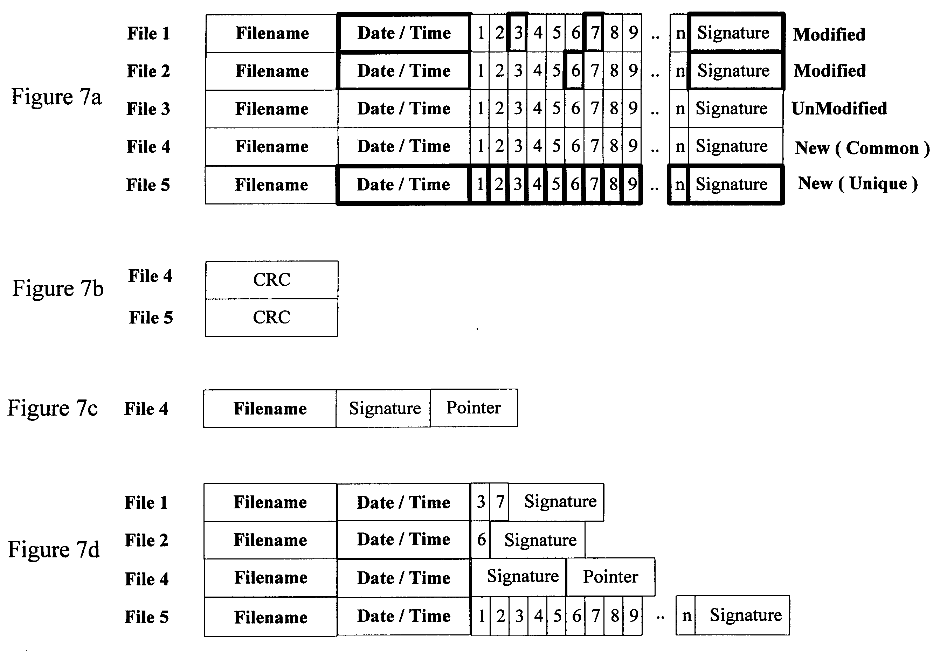

By way of example, assume that the client 210a only stores five files. The statuses of the five exemplary files stored by the client 210a are illustrated in Figure 7a. Obviously, in practice, the number of files will be much larger.

As shown in Figure 7a, File 1 and File 2 are modified files, where File 1 has modified blocks 3 and 7 and a respective modified date and time stamp, and File 2 has a modified block 5 and a respective modified date and time stamp. These modified files have already been backed up at least once. The modified portions of the files are highlighted in the diagram using thick lines. References to the modified blocks are stored in the FDA log 347. File 3 is an existing file, which has not been modified since the last backup, and File 4 and File 5 are new files. As shown, File 4 is a 'common' file, which has an exact copy already on the file server 240 for another client, and File 5 is a 'unique' file, which is new to both the client 210a and to the backup server 240. Although the statuses of the new files are shown in Figure 7a, this is purely for ease of explanation herein and it will be appreciated that in practice the client 210a has no advance information about whether the backup server 240 already contains versions of new files.

The first list, although not specifically shown, includes all files illustrated in Figure 7a except File 3, since File 3 has not been modified. Having built the first list, in step 620 the FDM 330 compiles a second file list for new files, including File 4 and File 5, as illustrated in Figure 7b. As shown, the second list contains for each file only a respective 4-byte CRC (calculated over the name, date/time stamp and file size information). The second list, comprising CRCs, is then transmitted to the backup server 240 in step 623. The 4-byte amount of information per file minimizes the network bandwidth required to send the information to the backup server 240, while at the same time providing enough information for comparison purposes.

The backup server 240 receives the request, in step 625, and the RFE module 510 compares the second file list with the entries in the RFE index 512 to find matching files which are already stored on the backup server 240.

An exemplary RFE index is illustrated in Figure 8. The RFE index 512 in Figure 8 includes entries for three clients: Client 110a, Client 110b and Client 110n. Also shown is a representation of the backup server on-line storage 242, representing the arrangement of files stored therein in very simple terms, for ease of understanding only (that is, the construction of files in the on-line storage 242 is not shown in terms of DTFs and BDFs). Figure 8 also shows the association between each file reference in the RFE index 512 with the files stored in the on-line storage 242, although it will be appreciated that there is no physical association, such as pointers, stored by the RFE index 512.

In this case, File 4 is a common file (in this example, it was initially stored for Client 110n), and File 1 is also shown as being a common file (in this example, it was initially stored for Client 110b). There is only one entry for each common file in the RFE index 512, where the entry is associated with the first client which introduced the file to the backup server 240.

Returning to the flow diagram, in step 630, the RFE module 510 compiles and returns a third list of files, and respective signatures and pointers, for the files that have RFE index entries, as shown in Figure 7c. Thus, File 4 only is included in the third list, where File 5, being a unique file, is ignored.

The backup agent 215a receives the third list, in step 635, and the BDM 340 calculates a signature for each file stored on the client 210a which appears in the list. In step 640 the calculated signatures are compared with the respective received signatures (in this case there is only one calculated and one received signature for File 4) to confirm which files are already stored on the backup server 240 (i.e. which files are redundant), and thus do not need backing up.

Next, for each modified file (File 1 and File 2), the BDM 340 determines which specific parts of the files are different, in step 645. For this operation, the BDM 340 communicates with the backup server 240 to retrieve the respective fingerprint information, as illustrated by step 645a.

In step 648, the DTM 350 builds a fourth list, as illustrated in Figure 7d, which shows File1, File 2, File 4 and File 5. This list comprises at least some information for all new and modified files. The data included with each entry in the fourth list are:- file name; modified date/time stamp; file differences (for modified files) or entire file data (for new and non-redundant files); signature; and pointer (if the file is a new, redundant file, the pointer is included to indicate where on the backup server 240 the file is already located).

Then, in step 650, the DTM 350 transmits the fourth list, as a backup data stream to be backup up to the backup server 240.

Finally, in step 655, the BSM 520 receives the data and arranges and stores the data in the backup server 240.

The above-described process outlines the steps required for a simple backup operation according to the present embodiment. The process can be varied or improved upon without moving away from the scope or the essence of the present invention. For example, more complex RFE procedures may be applied to cope with partial file redundancy, where the backup server recognizes that new files from one client are only slightly different from existing backed up files. As a result, only the differences between the new files and the already-stored files need to be backed up. Other variations and improvements will become apparent to the skilled person on reading the present description.

Attention is drawn to the applicant's co-pending patent application (HP ref: 397116), of the same filing date, which is aimed more specifically to a backup server, the contents of which are hereby incorporated by reference.

## Claims

1. A network client comprising network interface means, storage means for storing client data and means to schedule a backup operation for some or all of the stored data to be sent to backup apparatus attached to the network.

2. A client according to claim 1, further comprising means to generate a request to initiate a backup operation, means to transmit the request to the backup apparatus and means, in response to a positive reply from the backup apparatus, to initiate a backup operation.

3. A client according to claim 1 or claim 2, further comprising means to select data stored by the client to be backed up.

4. A client according to claim 3, wherein the means to select data comprises means to select data which has not been backed up.

5. A client according to claim 3 or claim 4, further comprising means to transmit to the backup apparatus a request including an indication of the identity of the data selected to be backed up.

6. A client according to claim 5, further comprising means to receive a response from the backup apparatus and means to modify in accordance with the response the selection of data to be backed up.

7. A client according to any one of the preceding claims, wherein the means to schedule a backup operation schedules on the basis of the time elapsed since a previous back up operation being greater than a pre-determined threshold time.

8. A client according to any one of the preceding claims, wherein the means to schedule a backup operation schedules on the basis of the amount of new data generated since a previous backup operation being greater than a pre-determined threshold amount of data.

9. A client according to any one of the preceding claims, further comprising means to confirm that any one or more of following parameters is within a respective pre-determined threshold:
client loading;
backup apparatus loading; and
network loading.

10. A client according to any one of the preceding claims, wherein the means to schedule comprises means to re-schedule a backup operation in the event that an attempt to schedule a backup operation fails or is refused.

11. A client according to any one of the preceding claims, further comprising restore means to transmit to the backup apparatus a request to restore one or more items of data.

12. A client according to claim 11, wherein the restore means is programmable to request at least one item of data which is not the version of the data which was last backed up.

13. A method of backing up data in a computer system comprising a network connecting one or more clients with a backup apparatus, the method comprising the step of a client scheduling a backup operation.

14. A data storage system comprising:
a network;
backup apparatus attached to the network, the backup apparatus comprising a backup storage means and backup processing means, the backup processing means comprising means to receive data from the network and means to store the received data in the backup storage means; and
at least one client attached to the network, the (or at least one) client comprising client storage means and client processing means, the client processing means comprising means to schedule a backup operation, means to select data in the client storage means to be backed-up, and means to transmit data across the network for storage by the backup apparatus.

15. A client configured for operation in a data storage system as claimed in claim 14.

16. Backup apparatus configured for operation in a data storage system as claimed in claim 14.
